# EUROPEAN PATENT SPECIFICATION

(11) **EP 0 809 564 B1**
(45) Date of publication and mention of the grant of the patent: **12.05.1999**
(21) Application number: 96901799.5
(22) Date of filing: 09.02.1996
(51) Int. Cl.: B29C 37/00, B29C 71/00, B29D 11/00

(54) **METHOD OF DEBLOCKING, EXTRACTING AND CLEANING POLYMERIC ARTICLES WITH SUPERCRITICAL FLUID**
VERFAHREN ZUR ENTFORMUNG, EXTRAKTION UND REINIGUNG VON GEGENSTÄNDEN AUS KUNSTSTOFF MITTELS EINER FLÜSSIGKEIT IM SUPERKRITISCHEM ZUSTAND
PROCEDE DE DEGAGEMENT, D'EXTRACTION ET DE NETTOYAGE D'ARTICLES POLYMERES A L'AIDE D'UN FLUIDE SUPERCRITIQUE

(30) Priority: 22.02.1995 US 393107
(43) Date of publication of application: 03.12.1997
(73) Proprietor: Novartis AG, 4058 Basel (CH)
(72) Inventor: HOFFMAN, Roger, James, Cumming, GA 30131 (US); TERRY, Wilson, Leonard, Jr., Alpharetta, GA 30202 (US)
(86) International application number: PCT/EP96/00554
(87) International publication number: WO 96/26059

(56) References cited:
- EP-A- 0 564 396
- EP-A- 0 616 838
- WO-A-91/09079
- DE-B- 2 414 928
- US-A- 3 806 619
- US-A- 4 873 218
- PATENT ABSTRACTS OF JAPAN vol. 018, no. 241 (P-1733), 9 May 1994 & JP,A,06 027424 (ASAHI CHEM IND CO LTD), 4 February 1994,
- CHEM.ENG.INTERNAT., vol. 100, no. 3, March 1993, pages 114--119, XP002005198 STEINER: "carbon dioxide's expanding role" cited in the application
- J.APPL.POLYM.SCI., vol. 48, no. 9, 6 May 1993, pages 1607-1609, XP002005199 COTTON,BARTLE,CLIFFORD,DOWLE: "rate and extent of supercritical fluid exraction of additives from polypropylene:diffusion,solubility,and matrix effects" cited in the application

## Description

### 1. FIELD OF THE INVENTION

This invention relates to a method of deblocking polymeric articles from molds.

### 2. DESCRIPTION OF THE RELATED ART

The use of supercritical fluids (SCF) for cleaning and extracting in the food industry is well known (See Chem. Engr. Internat. Ed., vol. 100, no. 3, p. 114-9). For example, U.S. Patent No. 3,806,619, issued Apr. 23, 1974 to Zosel, describes a process for decaffeinating coffee with supercritical fluids. Supercritical fluids have also been used to dry porous materials prepared in sol-gel processes. Supercritical fluid extraction of hydrophobic polymers, such as polypropylene, has also been explored (See J. Appl. Polym. Sci., 48, no. 9,6/5/93, p. 1607-9). Furthermore, porous sponges of biodegradable polymers have been formed by applying supercritical fluids in a manner requiring a sharp pressure drop (See PCT Int. Appl. No. WO 9109079, De Ponti). However, the efficient use of supercritical fluids requires high temperatures and pressures, which may damage certain polymeric materials.

Numerous polymeric articles are formed by placing a monomeric solution into a mold and then initiating polymerization. The efficient removal of molded articles from the mold represents a critical step in the design of a manufacturing process. After the polymeric article is separated from the mold, the article must typically be subjected to extraction processes to remove undesirable materials, such as unreacted or partially-reacted monomers (i.e., oligomers or short chain polymers) and residual solvent. An ophthalmic lens is an example of a polymeric article which may be molded in such a manner.

Ophthalmic lenses, such as contact lenses, are typically formed from hydrophilic monomers, in order to enhance biocompatibility with the eye. Contact lenses formed from hydrophilic polymers are desirable, in part, because hydrophilic contact lenses move well on the eye.

This movement enhances tear flow and debris removal beneath the lens, thereby improving patient comfort.

One method of forming a contact lens involves lathing the lens from a preformed polymeric disc, a so-called lens "button". Another method of forming contact lenses, as previously-mentioned, involves placing a monomeric solution into a lens mold and polymerizing the monomer. Double-sided molding is an example of the second type of lens molding process which has been gaining in popularity in recent times.

In molding lenses, subsequent to polymerization, the lenses are typically "deblocked", i.e., separated from the mold, and subjected to extraction processes for a period of hours. The extraction processes remove unreacted monomer and partially-reacted oligomer, solvents or other undesirable materials. These commercial extraction processes typically involve contacting the lenses with organic solvents, such as isopropyl alcohol, to solvate the undesireables. Such wet extraction processes are time consuming and costly, produce a wet lens which is not suited to immediate surface treatment. Furthermore, these extraction processes yield an effluent stream of solvent and monomer which is not easily disposed of.

In addition, the step of deblocking the lens presents manufacturing problems. First, the deblocking must occur quickly and consistently, in order to maximize production efficiency. Second, the deblocking must be complete, i.e., even minor portions of the polymeric lens must not remain adhered to the mold. Incomplete blocking typically results in substantial volumes of production scrap because the lens is likely to tear when removed from the mold. Moreover, even slight lens surface imperfections, caused by the lens adhering to the mold during deblocking, translate into major visual distortions for the lens wearer.

Thus, there is a need for improvements in efficiency, safety, cost, and waste-minimization in polymeric-article (especially ophthalmic-device) extraction and cleaning processes. In addition, there is a need for an improved method of deblocking a polymeric article (especially an ophthalmic device) from a mold immediately subsequent to polymerization.

### SUMMARY OF THE INVENTION

An object of the invention is to provide a method of quickly and efficiently deblocking a polymeric article from a mold subsequent to formation of the polymeric article by polymerization in the mold, to reduce production time required to process polymeric articles, to reduce production scrap in the production of polymeric articles and to reduce the amount of organic solvents required to produce polymeric articles.

This object is attained according to the invention by the method as defined by the claim 1.

Particular embodiments of the invention are the subject of the dependent claims.

The said method of deblocking polymeric articles from molds is carried out subsequent to polymerization processes. The method includes the step of contacting the polymeric article with a supercritical fluid at conditions and for a time sufficient to separate the polymeric article from the mold.

In one embodiment of the invention the step of simultaneously removing undesirable materials from a polymeric article and deblocking a polymeric article from a mold is included. The method includes a step of contacting the polymeric article with supercritical fluid at conditions and for a time sufficient to both remove certain undesirable materials from the polymeric article and separate the polymeric article from the mold.

### BRIEF DESCRIPTION OF THE DRAWINGS

FIG. 1 is a side sectional view of a multicomponent, batch-process, supercritical-fluid treatment apparatus.
FIG. 2 is a side sectional view of an in-line, supercritical-fluid treatment apparatus.

### DESCRIPTION OF THE PREFERRED EMBODIMENTS

The present innovative methods of extracting undesirable materials from a polymeric article, deblocking a polymeric article from a mold, and/or cleaning undesirable materials from the surface of a polymeric article, involve the steps of:
(1) providing a stream of supercritical fluid at a predetermined temperature and pressure;
(2) contacting a polymeric article with the supercritical (or near-supercritical) fluid for a predetermined period of time;
(3) agitating the supercritical fluid in a manner such that at least one of the following occur: (a) the polymeric article is separated (deblocked) from the mold, (b) unreacted monomer, oligomer, and/or solvent is extracted from the polymeric article with the supercritical fluid, and/or (c) undesirable materials are removed from the surface of the polymeric article; and
(4) removing the supercritical fluid, which may include unreacted monomer, oligomer, and/or solvent, from the polymeric article and mold.

A "supercritical fluid", as the term is used herein, means a substance at a temperature and pressure which places the substance in or near the supercritical regime. A temperature of at least about 20°C and a pressure at least about 600 psia are believed to be sufficient to achieve the advantages of the present invention.

"Removing undesirable materials", as used herein, means either extracting undesirable materials from the polymeric core or cleaning undesirable materials from the surface of the polymeric article. Undesirable materials which may be extracted include monomers, partially-reacted oligomers, solvents, polymerization initiators, and the like. Undesirable materials which may be cleaned from the surface of the polymeric article include the aforementioned-undesirable materials, debris or surface contaminants, such as abrasives used in surface polishing processes, oils, and the like.

The advantages achieved by the practice of the present invention are numerous. First, polymeric articles which are treated with supercritical fluids (SCF) are essentially "dry", i.e. free of solvent after SCF treatment, while organic solvent extraction, cleaning or deblocking processes yield "wet" products, i.e., some solvent remains in or on the article. In order to further process a polymeric article which is "wet", the article must be dried over a period of time, and typically, at an elevated temperature. In contrast, polymeric articles which have been subjected to SCF treatment may be nearly immediately indexed or moved to the next processing step (e.g., a subsequent surface treatment process).

Another advantage of the present invention is that the use of flammable, potentially toxic, organic solvents is minimized or eliminated. Thus, the invention increases safety in the manufacturing environment and/or reduces costs associated with protecting workers from the hazards of organic solvents. On a similar note, the expenses and hazards associated with disposal of spent organic solvents is reduced or eliminated with the present invention.

The instant invention offers yet another advantage in improving extraction efficiency. Extraction of contact lenses with supercritical fluids in accordance with the instant teachings may yield monomer/oligomer concentrations less than about 2 weight percent in a 1.5 to 3 hour time period using a 95 weight percent isopropyl alcohol / 5 weight percent carbon dioxide SCF mixture at about a one gallon per minute flow rate. In contrast, extraction of contact lenses with solvent typically yields monomer/oligomer concentrations at about 2% in a 24 hour time period. Thus, the present SCF extraction process yields the same quality product in a greatly reduced time frame.

While the amount of unreacted monomer/oligomer remaining in the finished polymeric article which can be tolerated depends on the intended application of the polymeric article, the specifications for medical devices, ophthalmic lenses and the like are typically quite stringent. Thus, the present invention is particularly suited to application in those areas which have restrictive regulatory requirements, especially in the ophthalmic lens industry.

Polymeric articles which may be treated with supercritical fluids in accordance with the present invention include a wide variety of polymeric articles which are formed by initiating polymerization of a monomeric mixture in a mold. Examples of such polymeric articles include, without limitation thereto, medical devices and components, such as drug delivery devices (transdermal, ophthalmic, parenteral, etc.) and components thereof; and, in particular, ophthalmic devices including vision correction devices, such as contact lenses, ocular implants, ocular onlays, and components thereof.

Polymers suited to the formation of polymeric articles which may be advantageously subjected to the presently described inventive processes include, without limitation thereto, hydrophobic polymers, such as polyethylene, polypropylene, poly(vinyl pyrrolidone) or polysiloxanes; hydrophilic polymers, such as poly(2-hydroxyethyl methacrylate), and poly(vinyl alcohol); biodegradable polymers such as polylactides, polyglycolides, and the like; and antimicrobial polymers such as polyquaternary ammonium compounds. Preferably, the SCF treatment processes of the present invention are applied to hydrophilic polymeric articles, capable of forming hydrogels when equilibrated with water (i.e., capable of absorbing about 10 weight percent water or more).

The SCF treatment processes of the present invention are preferably applied to contact lenses which are the copolymerization product of a copolymerizable macromer and two or more copolymerizable monomers.

The copolymerizable macromer is advantageously a macromer comprising a polysiloxane segment, even more preferred a polydimethylsiloxane segment. Said macromer, also preferred, comprises in addition urethane linkages and two or up to five terminal vinylic groups which are suitable for a polymerization reaction with the copolymerizable monomers. A most preferred macromer comprises a polydimethylsiloxane segment to which a vinylic isocyanate is bonded, such as isocyanatoethylmethacrylate (IEM). The macromer may comprise other segments not yet mentioned specifically. Examples for such segments are perfluoropolyether segments, diisocyanates, or derivatives of gluconic acid.

The first type of copolymerizable monomer used jointly with said macromer is a monovinylic siloxane having up to 15 silicon atoms. A preferred example is 3-tris(trimethylsiloxy)silylpropyl methacrylate (TRIS).

The second type of copolymerizable monomer used jointly with said macromer is a hydrophilic copolymerizable monomer as usually used in the manufacture of contact lenses. Typical examples are hydroxy-C₂-C₄-alkyl (meth)acrylates, such as 2-hydroxyethyl methacrylate, (meth)acrylic acid, dimethylacrylamide or N-vinyl pyrrolidone, of which dimethylacrylamide (DMA) is especially preferred.

In view of the foregoing it is preferred to apply the process of the present invention to a polymeric article which is a contact lens obtained form a mixture of a copolymerizable macromer and two or more, preferably two, copolymerizable monomers, as defined hereinbefore.

The mixture of macromer, monomer of the first type and monomer of the second type typically comprises, in percent by weight,
macromer about 30 to 60 %,
monomer of the first type: about 12.5 to 35 %,
monomer of the second type: about 27.5 to 35 %.

More preferred the mixture comprises, in percent by weight:
macromer: about 33 to 56 %,
monomer of the first type: about 14 to 33 %,
monomer of the second type: about 30 to 33 %.

Three examples of very preferred mixtures comprise about:
50 % of macromer, 20 % of monomer of the first type and 30 % of the second type;
56 % of macromer, 14 % of monomer of the first type and 30 % of the second type;
33 % of macromer, 33 % of monomer of the first type and 33 % of the second type;

In these mixtures, the monomer of the first type is most preferably TRIS and the monomer of the second type is most preferably DMA. Very much preferred are the mixtures disclosed in the examples, or application of the disclosed processes to contact lenses made from said mixtures, respectively.

Furthermore, by applying the supercritical fluid immediately subsequent to substantial completion of the polymerization reaction, i.e., while the polymeric article is still in the mold, one obtains a remarkable advantage in deblocking the article from the mold. Thus, application of SCF's at a time immediately subsequent to polymerization completion can simultaneously deblock the article from the mold and extract undesirable unreacted monomers, partially-reacted oligomers, solvents or other additives. This remarkable discovery provides the aforementioned advantages regarding solvent reduction or elimination, while simultaneously eliminating the need for additional equipment or materials to separate the polymeric article from the mold.

In the production of contact lenses, the present invention displays particularly remarkable advantages. Contact lenses which are molded in a double-sided molding process are typically molded in a hydrophobic polymer mold. A monomeric mixture, which commonly includes 2-hydroxyethyl methacrylate for hydrophilic "soft" contact lenses, is introduced into the mold. The mold containing the monomer may be irradiated to initiate polymerization. Once the lens has been formed, i.e., polymerization is substantially complete, the lens must be removed, i.e., deblocked, from the mold. At times, lenses are scrapped because of damage caused during deblocking steps, since the adhesion of the lens to the mold impairs the deblocking process. In addition, unreacted monomer and oligomers are undesirable materials which must be removed from the lens. Removal of undesirable materials may involve numerous subsequent processing steps, including solvent extraction and heat treating over extended time periods. Thus, many commercial contact lens production processes include numerous processing steps relating to extraction and deblocking.

However, in accordance with one embodiment of the present invention, a simultaneous extraction and deblocking step may be substituted for the prior art sequential extraction and deblocking steps. It has been unexpectedly found that the application of supercritical fluid to a contact lens in a mold for extraction purposes causes the lens to detach from the mold. This reduction in the attractive forces between the lens and the mold enables a quick removal of the lens from the mold, while minimizing the likelihood of lens damage and concomitant scrap formation.

The supercritical substance may be selected from a wide variety of substances which are gases or liquids at room temperature and pressure, including without limitation thereto, carbon dioxide; water; alcohols, especially low molecular weight alcohols such as isopropyl alcohol and ethanol; ammonia; ethylene; carbon disulfide; sulfurhexafluoride; hexane; acetone; and other common organic solvents, and mixtures thereof. A preferred group of SCF's includes alcohols such as isopropyl alcohol and relatively inert, inoccuous gases or fluids such as carbon dioxide or water. Carbon dioxide and isopropyl alcohol are more preferred.

While the conditions of the substance used as the supercritical fluid may vary somewhat, the substance must be at a temperature and pressure which places the substance in or near the supercritical region. The temperature and pressure of the supercritical fluid depend on the chosen fluid composition. For carbon dioxide, the temperature and pressure for producing a supercritical fluid are above about 68.95 bar (1085 psi) and about 31°C. A temperature range of 21 to 45°C and pressure range of 41.37 to 344.73 bar (600 to 5000 psia) are believed useful for a carbon dioxide stream. Preferably, the carbon dioxide stream is maintained at a temperature of about 21 to 35°C and a pressure of about 62.05 to 206.84 bar (900 to 3000 psia).

Particularly preferred mixtures of fluids useful in extracting and deblocking contact lenses include carbon dioxide and isopropyl alcohol (IPA). A preferred composition of the fluid includes about 70 to about 99 weight percent carbon dioxide and about 1 to about 30 weight percent isopropyl alcohol. A more preferred fluid composition includes about 75 to about 85 weight percent carbon dioxide and about 15 to about 25 weight percent isopropyl alcohol.

In order to property extract undesirable materials from a contact lens within a lens mold, the supercritical fluid should be property agitated. Sufficient agitation of the supercritical fluid may occur by merely contacting a stream of supercritical fluid with the polymeric article to be treated. However, a preferred flow regime is in the turbulent range, i.e., fluid flows having Reynold's numbers above 2100.

Supercritical fluid extraction equipment may be procured commercially from a variety of sources, including Pressure Products Industries, Inc. (Warminster, Pennsylvania) and Autoclave Engineering (Erie, Pennsylvania). A preferred SCF extractor for opthalmic devices, such as contact lenses, is the EP Model 12-3000, available from Autoclave Engineering.

In a preferred embodiment, the invention is a method for treating an ophthlamic lens subsequent to the polymerization of the lens. This embodiment of the invention is discussed with respect to a particularly preferred embodiment - the treatment of a contact lens. However, this embodiment of the invention is not limited to contact lenses, but includes intraocular lenses, drug delivery lenses, corneal onlays, etc.

If the lens is fabricated by a double-sided molding process, one half of the mold is separated from the lens prior to application of supercritical fluid. Typically, the lens remains removably affixed to the base mold half (convex mold half), leaving the front or convex lens surface exposed. The lens mold may be treated in order to render one mold half more adherent and/or the other mold half less adherent, in order to ensure consistent location of the lens on the desired mold half. Alternatively, sensing equipment may be used to determine the mold half to which the lens is removably-affixed, so that the lens-containing mold half is treated with the supercritical fluid. Regardless of the technique chosen, the lens-retaining mold half is treated with supercritical fluid subsequent to the first mold half separation step.

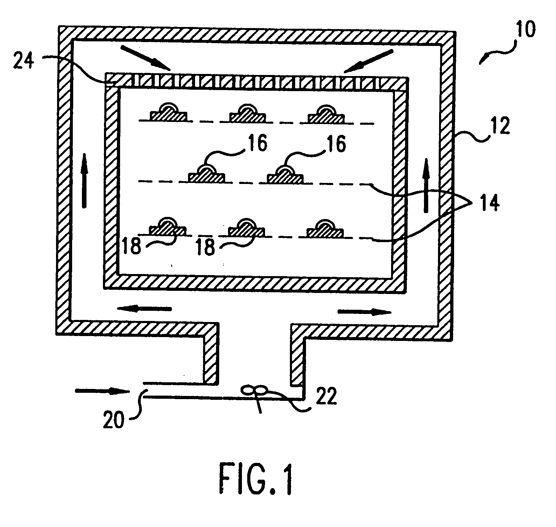

Treatment of the lens on the mold half with supercritical fluid is preferrably accomplished in a batch process to ensure thorough contact with the fluid and to ensure the fluid remains or cycles through the supercritical temperature and pressure ranges. In order to increase processing efficiencies, a plurality of lenses may be treated in one batch process. FIG. 1 schematically illustrates an apparatus capable of batch treating a plurality of lenses.

Referring to FIG. 1, lens-treating apparatus 10 is surrounded with insulation 12 sufficient to maintain the applied fluid at the desired supercritical temperature and pressure ranges. Trays 14 support a plurality of lenses 16 affixed to molds 18. The support trays either have perforations or are sufficiently porous to allow supercritical fluid to flow through the trays.

In operation, the trays are loaded into lens treating apparatus 10, either manually or via an automated lens distribution system, through an access opening (not shown), with the access opening being sealed subsequent to the loading step. Supercritical fluid, entering through inlet 20 at a rate of about 0.378 to 18.93 ℓ (0.1 to 5 gallons) per minute, is distributed uniformly to passageways positioned along the walls of the container by agitation means 22. At a point near the top of apparatus 10, supercritical fluid passes through a flow distribution member 24, which provides uniform supercritical fluid flow across a cross-section of the apparatus perpendicular to the flow. The supercritical fluid flows through trays 14, contacting lenses 16 and molds 18, preferably in a turbulent fashion, before exiting through the fluid outlet (not shown).

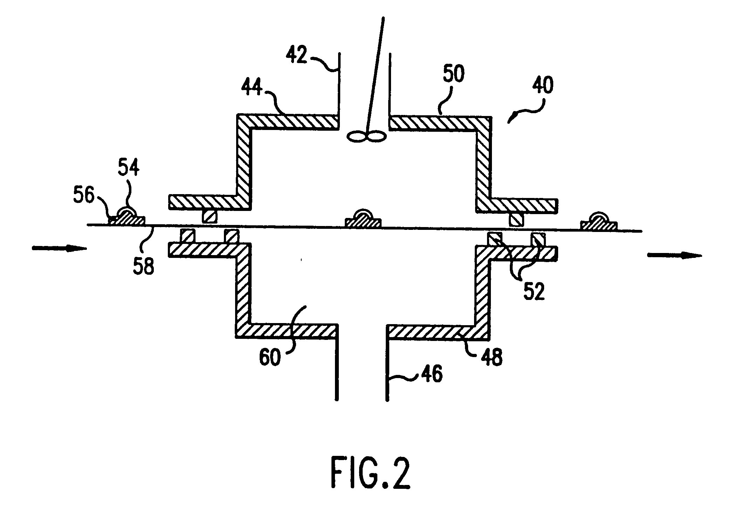

An alternative lens treating apparatus 40 is illustrated in FIG. 2. Apparatus 40, shown in closed configuation, includes inlet 42 on upper portion 44 and outlet 46 on lower portion 48. Apparatus 40 further includes agitation means 50 and peripheral sealing means 52. The sealing of upper portion 44 to lower portion 48, via peripheral sealing means 52, defines lens treating cavity 60.

In operation, upper and lower portions 44 and 48 are vertically separated to allow lens 54 affixed to mold 56 to index on conveyor 58 to a position between the upper and lower portions. After a lens-containing mold is indexed to the desired position intermediate upper and lower portions 44 and 48, the upper and lower portions are mated, thereby forming a liquid impermeable seal defined by peripheral sealing means 52. Supercritical fluid flows through inlet 42 and is dispersed by agitating means 50, thereby contacting the lens in a turbulent fashion. Spent supercritical fluid exits through outlet 46 and the upper and lower portions 44 and 48 are separated to allow the treated lens-containing mold to index out and the process to begin again.

While the step of agitating the supercritical fluid is desirable, it is not a required step. In a preferred embodiment, agitation is provided by mechanical means, as shown in FIGS. 1 and 2. However, a preferred agitation state may arise merely from the application of the supercritical fluid at the appropriate pressure, i.e., a turbulent flow is developed by the passageway dimensions, passageway shape, and fluid pressure.

FIGS. 1 and 2 present two designs for equipment suited to treating lenses with supercritical fluids. However, a wide variety of alternatives will be readily apparent to persons having ordinary skill in the art, given the teachings of the present invention. Accordingly, the invention should not be strictly constrained to the designs presented in FIGS. 1 and 2.

The previous disclosure will enable one having ordinary skill in the art to practice the invention. In order to better enable the reader to understand specific embodiments and the advantages thereof, reference to the following examples is suggested.

EXAMPLE I: Hydrophilic contact lens are formed in a double-sided molding process. The concave mold halves are manually removed, leaving the lenses predominately affixed to the convex mold halves. The lenses and affixed convex mold halves are placed inside the treatment cavity of an Autoclave Engineering model EP-2000 Supercritical CO₂ Treatment System. Supercritical carbon dioxide fluid at 206.84 bar g (3000 psig) and 35°C is applied to the lenses and affixed mold halves for a period of about 100 minutes. The lenses affixed to the base-curve mold halves are not deblocked from the mold halves.

EXAMPLE II: Hydrophilic contact lenses and affixed mold halves are treated as described in Example I, with the SCF pressure at 206.84 bar g (3000 psig) and temperature at 30°C. The treatment period is about 100 minutes. The lenses affixed to the base-curve mold halves are not deblocked from the mold halves.

EXAMPLE III: Hydrophilic contact lenses and affixed mold halves are treated as described in Example I, with the SCF pressure at 206.84 bar g (3000 psig) and temperature at 25°C. The treatment period is about 100 minutes. The lenses are partially, but incompletely, deblocked from the base-curve mold halves.

EXAMPLE IV: Hydrophilic contact lenses and affixed mold halves are treated as described in Example I, with the near-supercritical fluid pressure at 68.95 bar g (1000 psig) and temperature at 25°C. The treatment period is about 100 minutes. The lenses are partially, but incompletely, deblocked from the base-curve mold halves.

EXAMPLE V: Hydrophilic contact lenses and affixed mold halves are treated as described in Example I, but a 19 weight percent isopropyl alcohol (IPA) / 81 weight percent carbon dioxide mixture is used, instead of the 100% carbon dioxide of Example I. The pressure is 206.84 bar g (3000 psig) while the temperature was 30°C. The treatment period is about 97 minutes. The lenses are deblocked from the base-curve mold halves.

EXAMPLE VI: Hydrophilic contact lenses and affixed mold halves are treated as described in Example I, but a 14 weight percent isopropyl alcohol / 86 weight percent carbon dioxide mixture is used, instead of the 100% carbon dioxide of Example I. The pressure is pulsed while the temperature is held at about 30°C. The pressure cycle includes about a 10 minute period at 206.84 bar g (3000 psig) followed by a pressure drop to about 68.95 bar g (1000 psig), then a return to the 206.84 bar g (3000 psig) pressure. The treatment period is about 81 minutes. The lenses are deblocked from the base-curve mold halves.

EXAMPLE VII: Hydrophilic contact lenses and affixed mold halves are treated as described in Example I, but a 10 weight percent isopropyl alcohol / 90 weight percent carbon dioxide SCF mixture is used, instead of the 100% carbon dioxide of Example I. The pressure is 206.84 bar g (3000 psig) while the temperature is 30°C. The treatment period is about 100 minutes. The lenses are deblocked from the mold halves. The average weight percent extractables in the lenses is about 1.6.

EXAMPLE VIII (COMPARATIVE): Hydrophilic contact lenses are deblocked from molds. The lenses are immersed for about 15 hours in isopropyl alcohol. The spent alcohol is replaced with fresh alcohol, and the lenses are allowed to soak again for about 8 hours. The average weight percent extractables in the lenses is about 1.1. Results are shown in Table I for comparison with Example VII.

**TABLE 1**

| Example | Pressure bar g (psig) | Temperature (°C) | Exposure Time (minutes) | Composition (weight percent) | Results |
|---|---|---|---|---|---|
| I | (3000) 206.84 | 35 | 100 | 100% CO₂ | no deblocking from base-curves |
| II | (3000) 206.84 | 30 | 100 | 100% CO₂ | no deblocking from base-curves |
| III | (3000) 206.84 | 25 | 100 | 100% CO₂ | incomplete deblocking from base-curves |
| IV | (1000) 68.95 | 25 | 100 | 100% CO₂ | incomplete deblocking from base-curves |
| V | (3000) 206.84 | 30 | 97 | 81% CO₂ | complete deblocking from base-curves |
| | | | | 19% IPA | |
| VI | pulsed at (3000 and 1000) 206.84 and 68.95 | 30 | 81 | 86% CO₂ | complete deblocking from base-curves |
| | | | | 14% IPA | |
| | | | | | negligible extractables |
| VII | (3000) 206.84 | 30 | 100 | 90% CO₂ | incomplete deblocking from base-curves; 1.6% extractables |
| | | | | 10% IPA | |
| VIII (control) | (about 14.7) 1.013 | about 21 | 1380 | 100% IPA | 1.1% extractables |

In all Examples, the lenses which are affixed to the front-curve mold halves are deblocked. Variations in deblocking occur only in lenses affixed to the base-curve mold halves.

Examples V and VI illustrate that contact lenses may be deblocked from lens molds subsequent to polymerization steps by application of supercritical carbon dioxide/isopropyl alcohol fluids. Deblocking problems in Examples I-VI are believed to be a result of non-optimized conditions and/or fixturing problems, i.e., improper location of the lenses and mold halves within the SCF treatment cavity.

Further, a comparison of Example VII to Comparative Example VIII shows that extraction of lenses with supercritical fluids produces extractable levels comparable to extraction by batch soaking in isopropyl alcohol, but over a significantly reduced time period.

EXAMPLE IX: About 51.5 g (50 mmol) of the perfluoropolyether Fomblin® ZDOL (from Ausimont S.p.A, Milan) having a mean molecular weight of 1030 g/mol and containing 1.96meq/g of hydroxyl groups according to end-group titration is introduced into a three-neck flask together with 50mg of dibutyltin dilaumte. The flask contents are evacuated to about 20 mbar with stirring and subsequently decompressed with argon. This operation is repeated twice. About 22.2g (0.1mol) of freshly distilled isophorone diisocyanate kept under argon are subsequently added in a counterstream of argon. The temperature in the flask is kept below about 30°C by cooling with a waterbath. After stirring overnight at room temperature, the reaction is complete. Isocyanate titration gives an NCO content of about 1.40 meq/g (theory: 1.35 meq/g).

About 202 g of the α,ω-hydroxypropyl-terminated polydimethylsiloxane KF-6001 from Shin-Etsu having a mean molecular weight of 2000g/mol (1.00meq/g of hydroxyl groups according to titration) are introduced into a flask. The flask contents are evacuated to approx. 0.1 mbar and decompressed with argon. This operation is repeated twice. The degassed siloxane is dissolved in about 202 ml of freshly distilled toluene kept under argon, and about 100 mg of dibutyltin dilaurate (DBTDL) are added. After complete homogenization of the solution, all the perfluoropolyether reacted with isophorone diisocyanate (IPDI) is added under argon. After stirring overnight at room temperature, the reaction is complete. The solvent is stripped off under a high vacuum at room temperature. Microtitration shows about 0.36 meq/g of hydroxyl groups (theory 0.37meq/g).

About 13.78 g (88.9mmol) of 2-isocyanatoethyl methacrylate (IEM) are added under argon to 247g of the α,ω-hydroxypropyl-terminated polysiloxane-perfluoropolyether-polysiloxane three-block copolymer (a three-block copolymer on stoichiometric average, but other block lengths are also present). The mixture is stirred at room temperature for three days. Microtitration then no longer shows any isocyanate groups (detection limit 0.01 meq/g). About 0.34 meq/g of methacryl groups are found (theory 0.34meq/g).

The macromer prepared in this way is completely colourless and clear. It can be stored in air at room temperature for several months in the absence of light without any change in molecular weight.

About 10.0 grams of the macromer are dissolved in 3.3 grams of ethanol (Fluka, puriss. p.a.). After complete homogenization of the solution, about 4.0 grams of 3-tris(trimethylsiloxy)silylpropyl methacrylate (TRIS, from Shin-Etsu, product no. KF-2801), about 5.9 g. freshly distilled dimethylacrylamide (DMA), about 0.1 g. Blemer® QA (a methacrylate having quaternary ammonium substituents, Linz Chemie) and about 100 mg of photoinitiator Darocur® 1173 (Ciba) are added. The solution is filtered through a TEFLON membrane having a pore width of 0.45 mm under an argon pressure of from about 1 to 2 atm.

The filtered solution is frozen in a flask in liquid nitrogen, the flask is evacuated under a high vacuum, and the solution is returned to room temperature with the flask sealed. This degassing operation is repeated twice. The flask containing the macromer/comonomer solution is then transferred into a glove box with an inert gas atmosphere, where the solution is pipetted into dust-free, polypropylene contact lens molds. The molds are closed, and the polymerization reaction is effected by UV irradiation, with simultaneous crosslinking. The molds are then opened and placed in isopropyl alcohol, causing the resultant lenses to swell out of the molds. The lenses are extracted for about 24 hours with nearly continuous replenishing of isopropyl alcohol. Subsequently, the lenses are dried under high vacuum.

After preparation the lenses are dried overnight under vacuum. An Autoclave Engineering model EP-2000 Supercritical CO₂ Treatment System extraction vessel is loaded with 7 lenses. The extraction vessel is filled with carbon dioxide and the pressure is raised to about 202.6 bar (200 atm) with a temperature of about 30°C. The vessel is allowed to equilibrate for about 10 minutes.

The lenses are extracted with an 80:20 volume/volume ratio of a carbon dioxide/isopropyl alcohol (CO₂/IPA) stream at about 202.6 bar (200 atm) and a temperature of about 30°C. The flow rate is held nearly constant at about 1.0 milliliters/minute. Extract is collected on a solid-phase adsorbent trap at about -10°C and then desorbed at about 100°C by about 3.0 milliliters of isopropyl alcohol wash per trap. Gravimetric analysis of extract residue collected is performed after removing isopropyl alcohol by application of a nitrogen stream under a vacuum.

The prior extraction cycle is applied a total of 10 times. The process is repeated for another set of seven lenses. The weight percent extractables is determined by summing the weights of the extractables removed and dividing this by the sum of the extracted lens weights. This average weight percent extractables removed is about 6.0%.

EXAMPLE X: Contact lenses are prepared in accordance with Example IX. Extraction is performed substantially as described in Example IX, with (a) a 70:30 CO₂/IPA stream as opposed to an 80:20 stream and (b) a total number of extraction cycles of 5 rather than 10.

The average weight percent extractables, determined in accordance with the procedure of Example IX, is about 6.1%.

EXAMPLE XI: Contact lenses are prepared in accordance with Example IX. Extraction is performed substantially as described in Example IX, with (a) a 70:30 CO₂/IPA stream as opposed to an 80:20 stream and (b) a total number of extraction cycles of 10.

The average weight percent extractables, determined in accordance with the procedure of Example IX, is about 6.8%.

EXAMPLE XII: Contact lenses are prepared in accordance with Example IX. Extraction is performed substantially as described in Example IX, with (a) a 70:30 CO₂/IPA stream as opposed to an 80:20 stream and (b) a total number of extraction cycles of 2 rather than 10.

The average weight percent extractables, determined in accordance with the procedure of Example IX, is about 4.0%.

EXAMPLE XIII: In a dry box under nitrogen atmosphere, about 200 grams of dry PDMS dipropoxyethanol (Shin-Etsu) is added to a container. Isocyanatoethyl methacrylate (IEM) in an amount equal to about 2 moles per mole PDMS dialkanol is added to the container. About 0.1 weight percent dibutyltin dilaurate (DBTL) catalyst, based on PDMS dialkanol weight, is added to the container along with a stir bar. The container is immersed in an oil bath atop a stir plate, and secured in place with a clamp. A stream of UPC air at about 2 psig is passed over the mixture. The mixture is agitated at room temperature (about 22°C) for about 24 hours. An iterative procedure follows in which the mixture is analyzed for isocyanate content and IEM is added if the PDMS dialkoxyalkanol has not been completely reacted. The mixture is stirred about 24 hours more. The macromer produced is a siloxane-containing macromer.

A prepolymerization mixture is prepared by mixing about 56 grams of the siloxane-containing macromer, about 14 grams of TRIS, about 29 grams N,N-dimethylacrylamide (DMA), about 1 gram methacrylic acid, about 0.5 grams Darocur® 1173 photoinitiator, and about 20 grams hexanol. The mixture is agitated for about 20 minutes at room temperature.

Next, the mixture is degassed via a series of freezing and thawing steps. The container is placed in a liquid nitrogen bath until the mixture solidifies. A vacuum is applied to the container at a pressure of about 200 millitorr or less for about 5 minutes. Then, the container is placed in a bath of room temperature water until the mixture is liquid again. This process is performed a total of three times.

The mixture is then polymerized to form contact lenses. The prepolymerization mixture is poured into polypropylene contact lens molds in a nitrogen atmosphere. The polymerization is effected by applying UV radiation (about 4-6 mW/cm²) for a period of about 15 minutes.

The lenses are transferred into a plasma coating apparatus wherein they are surface treated in a methane/"air" mixture ("air", as used here, denotes 79% nitrogen and 21% oxygen) for a period of about 5 minutes. The apparatus and plasma treatment process have been disclosed by H. Yasuda in in "Plasma Polymerization", Academic Press, Orlando, Florida (1985), pages 319 forward.

Extraction of the lenses is performed substantially as described in Example IX, with (a) a 70:30 CO₂/IPA stream as opposed to an 80:20 stream and (b) a total number of extraction cycles of 5 rather than 10.

The average weight percent extractables, determined in accordance with the procedure of Example IX, is about 0.2%.

EXAMPLE XIV: Before the reaction, the amino-functionalized polydimethylsiloxane (α,ω-bisaminopropyl-dimethylpolysiloxane) employed for the synthesis (X-22-161-C, Shin Etsu, JP) was finely dispersed in acetonitrile, extracted and then subjected to molecular distillation.

The following reactions take place with exclusion of H₂O. About 200 g of purified amino-functionalized polydimethylsiloxane (0.375 meq of NH₂/g; Mn(VPO) 3400-3900 (VPO, Vapour Pressure Osmometry)), dissolved in about 200 ml of absolute THF, are slowly added dropwise to a suspension of about 13.35 g (75 mmol) of D(+)gluconic acid d-lactone in about 50 ml of absolute THF and the fixture is stirred at about 40°C for about 24 hours until the lactone has reacted completely. (Monitoring of the reaction by thin layer chromatography (TLC): silica gel; i-propanol/H₂O/ethyl acetate 6:3:1; staining with Ce(IV) sulfate/phosphoromolybdic acid solution (CPS reagent)). After the reaction, the reaction solution is concentrated to dryness and the residue is dried under 3 Pa (0.03 mbar) for 48 hours. 213.3 g of α,ω-bis(3-gluconamidopropyl)-poly-dimethylsiloxane are obtained. Titration of the amino groups with perchloric acid shows a conversion of the amino groups of more than 99.8%.

The product (of α,ω-bis-3-gluconamidopropyl-dimethylpolysiloxane) obtained above (about 213.3 g) is dissolved in about 800 ml of absolute THF and the solution is heated to about 40°C with the addition of catalytic amounts of dibutyltin dilaurate (DBTDL). About 29.2 g (187.5 mmol) of IEM in about 20 ml of absolute THF are added dropwise to this solution over a period of about 4 hours. This corresponds to a concentration of 1.2 equivalents of IEM per gluconamide unit. The reaction is carried out in the course of 48 hours (monitoring of the reaction by IR spectroscopy detection of the NCO ties). The reaction solution is concentrated and the product is dried in a brown glass flask under 3 Pa (0.03mbar) for 24 hours, while cooling with ice. 227.2 g of a colourless rubber-elastic product of high optical transparency remain.

Before the polymerization, the acrylates employed, N,N-dimethylacrylamide (DMA) and 3-methacryloyloxypropyl-tris(trimethylsilyloxy)silane (TRIS) are each freed from inhibitors by distillation. About 1.44 g (about 14 mmol) of DMA and about 1.44 g (3.4 mmol) of TRIS are weighed into a 50 ml round-bottomed flask and the flask is flushed with N₂ for half an hour, while cooling with ice. About 1.44 g of the macromer are transferred to a round-bottomed flask with a nitrogen attachment, degassed under about 3 Pa (0.03mbar) for 24 hours and then dissolved in 2.7 g of ethanol which has been flushed with N₂ for half an hour beforehand. The subsequent preparation of samples and the polymerization are carried out inside a glove box with exclusion of oxygen. The above monomer mixture and the macromer solution, with the addition of about 0.012 g (0.21mmol) of Darocur® 1173 and the mixture is subjected to microfiltration (0.45 mm filter). About 180 µl of this mixture are introduced into a polypropylene mould, which is then closed with an appropriate lid of polypropylene. The mixture is then irradiated with a UV-A mercury high pressure lamp in a nitrogen atmosphere in a UV oven equipped for this for 5 minutes. The lamps (5 each of the brand TLK40W/10R, Philips) are above and below the holder inserted. The irradiation intensity is 14.5mW/cm².

The polypropylene mold is opened and the finished discs or lenses are removed. Extraction is performed substantially as described in Example IX, with (a) a 100% CO₂ stream as opposed to an 80:20 CO₂/IPA stream and (b) a total number of extraction cycles of 10.

The average weight percent extractables, determined in accordance with the procedure of Example IX, is about 1.6%.

EXAMPLE XV: Contact lenses are prepared in accordance with Example XIV. Extraction is performed substantially as described in Example IX, with (a) a 95:5 CO₂/IPA stream as opposed to an 80:20 stream and (b) a total number of extraction cycles of 10.

The average weight percent extractables, determined in accordance with the procedure of Example IX, is about 1.9%.

EXAMPLE XVI: Contact lenses are prepared in accordance with Example XIV. Extraction is performed substantially as described in Example IX, with (a) a 90:10 CO₂/IPA stream as opposed to an 80:20 stream and (b) a total number of extraction cycles of 10.

The average weight percent extractables, determined in accordance with the procedure of Example IX, is about 2.9%.

EXAMPLE XVII: Contact lenses are prepared in accordance with Example XIV. Extraction is performed substantially as described in Example IX, with (a) an 80:20 CO₂/IPA stream and (b) a total number of extraction cycles of 10.

The average weight percent extractables, determined in accordance with the procedure of Example IX, is about 4.7%.

EXAMPLE XVIII: Contact lenses are prepared in accordance with Example XIV. Extraction is performed substantially as described in Example IX, with (a) a 70:30 CO₂/IPA stream as opposed to an 80:20 stream and (b) a total number of extraction cycles of 10.

The average weight percent extractables, determined in accordance with the procedure of Example IX, is about 5.6%.

**TABLE 2**

| Example | Percent isopropyl alcohol in IPA/CO₂ extraction fluid | Number of Extraction Cycles | Non-volatile Extractables Removed (weight percent) |
|---|---|---|---|
| IX | 20 | 10 | 6.0 |
| X | 30 | 5 | 6.1 |
| XI | 30 | 10 | 6.8 |
| XII | 30 | 2 | 4.0 |
| XIII | 30 | 5 | 0.2 |
| XIV | 0 | 10 | 1.6 |
| XV | 5 | 10 | 1.9 |
| XVI | 10 | 10 | 2.9 |
| XVII | 20 | 10 | 4.7 |
| XVIII | 30 | 10 | 5.6 |

The invention has been described in detail, with reference to certain preferred embodiments, in order to enable the reader to practice the invention without undue experimentation. However, a person having ordinary skill in the art will readily recognize that many of the previous components and parameters may be varied or modified to a certain extent without departing from the scope of the invention. Furthermore, titles, headings, or the like are provided to enhance the reader's comprehension of this document, and should not be read as limiting the scope of the present invention. Accordingly, the intellectual property rights to this invention are defined only by the following claims.

## Claims

1. A method of deblocking polymeric articles from molds, comprising the steps of:
(1) providing a stream of supercritical fluid at a predetermined temperature and a predetermined pressure;
(2) contacting said polymeric article with the supercritical fluid for a predetermined period of time sufficient to separate, i.e. to deblock, said polymeric article from said mold; and
(3) removing the supercritical fluid from said polymeric article.

2. A method of claim 1, further comprising the step of mechanically agitating the supercritical fluid.

3. A method of claim 1, wherein said supercritical fluid stream is provided in a turbulent flow regime.

4. A method of claim 1, wherein the polymeric article is simultaneously deblocked from the mold while undesirable materials are removed with the supercritical fluid.

5. A method of claim 4, wherein said removing involves extracting unreacted monomer, oligomer, and/or solvent from the core of the polymeric article.

6. A method of claim 4, wherein said removing involves cleaning undesirable materials from the surface of the polymeric article.

7. A method of claim 1, wherein said polymeric article is selected from the group consisting of medical devices.

8. A method of claim 7, wherein said polymeric article is an ophthalmic device.

9. A method of claim 8, wherein said polymeric article is a contact lens.

10. A method of claim 1, wherein the flow rate of said supercritical fluid stream is between 0.38 and 18.93 liters (0.1 and 5 gallons) per minute.

11. A method of claim 1, wherein said supercritical fluid is selected from the group consisting of carbon dioxide, alcohols, hexane, acetone, sulfur hexafluoride, and mixtures thereof.

12. A method of claim 1, wherein said supercritical fluid is selected from the group consisting of carbon dioxide, isopropyl alcohol, and mixtures thereof.

13. A method of claim 1, wherein said supercritical fluid is carbon dioxide.

14. A method of claim 12, wherein said supercritical fluid comprises:
(a) 70 to 99 weight percent carbon dioxide; and
(b) 1 to 30 weight percent isopropyl alcohol.

15. A method of claim 14, wherein said supercritical fluid comprises:
(a) 75 to 85 weight percent carbon dioxide; and
(b) 15 to 25 weight percent isopropyl alcohol.

16. A method of claim 1, wherein said pressure is between 4.12 MPa and 34.35 MPa (600 and 5000 psia) and said temperature is between 21 and 45°C.

17. A method of claim 16, wherein said pressure is between 6.18 MPa and 20.61 MPa (900 and 3000 psia) and said temperature is between 21 and 35°C.

18. A method of claim 1, further comprising the step of mechanically agitating the supercritical fluid to produce a turbulent flow regime,
wherein said supercritical fluid comprises 70 to 99 weight percent carbon dioxide and 1 to 30 weight percent isopropyl alcohol,
wherein the flow rate of said supercritical fluid stream is between 0.38 and 18.93 liters (0.1 and 5 gallons) per minute, and
wherein said polymeric article is an ophthalmic device.

19. A method according to claim 1 wherein the polymeric article is a contact lens prepared from a mixture comprising a copolymerizable macromer and two or more copolymerizable monomers.

## Patentansprüche

1. Verfahren zur Entformung von Polymergegenständen aus Formen, umfassend die Schritte:
(1) Bereitstellen eines Stroms eines überkritischen Fluids bei einer vorbestimmten Temperatur und einem vorbestimmten Druck;
(2) Inkontaktbringen des Polymergegenstands mit dem überkritischen Fluid für einen vorbestimmten Zeitraum, der ausreicht, um den Polymergegenstand aus der Form zu trennen, d.h. zu Entformen, und
(3) Entfernen des überkritischen Fluids von dem Polymergegenstand.

2. Verfahren nach Anspruch 1, weiterhin umfassend den Schritt mechanisches Bewegen des überkritischen Fluids.

3. Verfahren nach Anspruch 1, wobei der überkritische Fluidstrom in einem turbulenten Strömungsbereich bereitgestellt wird.

4. Verfahren nach Anspruch 1, wobei der Polymergegenstand aus der Form entformt wird, während gleichzeitig unerwünschte Materialien mit dem überkritischen Fluid entfernt werden.

5. Verfahren nach Anspruch 4, wobei das Entfernen Extraktion nichtumgesetzten Monomers, Oligomers und/oder Lösungsmittels aus dem Kern des Polymergegenstand einbezieht.

6. Verfahren nach Anspruch 4, wobei das Entfernen Reinigen der Oberfläche des Polymergegenstands von unerwünschten Materialien einbezieht.

7. Verfahren nach Anspruch 1, wobei der Polymergegenstand aus der aus medizinischen Vorrichtungen bestehenden Gruppe ausgewählt ist.

8. Verfahren nach Anspruch 7, wobei der Polymergegenstand eine ophthalmische Vorrichtung ist.

9. Verfahren nach Anspruch 8, wobei der Polymergegenstand eine Kontaktlinse ist.

10. Verfahren nach Anspruch 1, wobei die Strömungsgeschwindigkeit des überkritischen Fluidstroms zwischen 0,38 und 18,93 Liter (0,1 und 5 Gallon) pro Minute liegt.

11. Verfahren nach Anspruch 1, wobei das überkritische Fluid aus der Gruppe, bestehend aus Kohlendioxid, Alkoholen, Hexan, Aceton, Schwefelhexafluorid und Gemischen davon, ausgewählt ist.

12. Verfahren nach Anspruch 1, wobei das überkritische Fluid aus der Gruppe, bestehend aus Kohlendioxid, Isopropylalkohol und Gemischen davon, ausgewählt ist.

13. Verfahren nach Anspruch 1, wobei das überkritische Fluid Kohlendioxid ist.

14. Verfahren nach Anspruch 12, wobei das überkritische Fluid umfaßt:
(a) 70 bis 99 Gew.-% Kohlendioxid und
(b) 1 bis 30 Gew.-% Isopropylalkohol.

15. Verfahren nach Anspruch 14, wobei das überkritische Fluid umfaßt:
(a) 75 bis 85 Gew.-% Kohlendioxid und
(b) 15 bis 25 Gew.-% Isopropylalkohol.

16. Verfahren nach Anspruch 1, wobei der Druck zwischen 4,12 MPa und 34,35 MPa (600 und 5000 psia) liegt und die Temperatur zwischen 21 und 45°C liegt.

17. Verfahren nach Anspruch 16, wobei der Druck zwischen 6,18 MPa und 20,61 MPa (900 und 3000 psia) liegt und die Temperatur zwischen 21 und 35°C liegt.

18. Verfahren nach Anspruch 1, weiterhin umfassend den Schritt mechanisches Bewegen des überkritischen Fluids zur Herstellung eines turbulenten Strömungsbereichs,
wobei das überkritische Fluid 70 bis 99 Gew.-% Kohlendioxid und 1 bis 30 Gew.-% Isopropylalkohol umfaßt,
wobei die Strömungsgeschwindigkeit des überkritischen Fluidstroms zwischen 0,38 und 18,93 Liter (0,1 und 5 Gallon) pro Minute liegt und
wobei der Polymergegenstand eine ophthalmische Vorrichtung ist.

19. Verfahren nach Anspruch 1, wobei der Polymergegenstand eine Kontaktlinse ist, die aus einem Gemisch, das ein copolymerisierbares Macromer und zwei oder mehrere copolymerisierbare Monomere umfaßt, hergestellt ist.

## Revendications

1. Une méthode pour débloquer des articles polymères hors de moules, comprenant les étapes de:
(1) mise à disposition d'un courant de fluide supercritique à une température prédéterminée et sous une pression pré-déterminée;
(2) mise en contact dudit article polymère avec le fluide supercritique pendant une période de temps pré-déterminée suffisante pour séparer, c'est-à-dire pour débloquer ledit article polymère dudit moule; et
(3) retrait du fluide supercritique dudit article polymère.

2. Une méthode selon la revendication 1, comprenant également l'étape d'agitation mécanique du fluide supercritique.

3. Une méthode selon la revendication 1, selon laquelle ledit courant de fluide supercritique est fourni dans un système de flux turbulent.

4. Une méthode selon la revendication 1, selon laquelle l'article polymère est débloqué simultanément du moule alors que les matières indésirables sont retirées avec le fluide supercritique.

5. Une méthode selon la revendication 4, selon laquelle ledit retrait implique l'extraction du monomère, de l'oligomère et/ou du solvant qui n'ont pas réagi hors du noyau de l'article polymère.

6. Une méthode selon la revendication 4, selon laquelle ledit retrait implique le nettoyage des matières indésirables hors de la surface de l'article polymère.

7. Une méthode selon la revendication 1, selon laquelle ledit article polymère est choisi parmi le groupe comprenant des dispositifs médicaux.

8. Une méthode selon la revendication 7, selon laquelle ledit article polymère est un dispositif ophtalmique.

9. Une méthode selon la revendication 8, selon laquelle ledit article polymère est une lentille de contact.

10. Une méthode selon la revendication 1, selon laquelle le débit dudit courant de fluide supercritique est compris entre 0,38 et 18,93 litres par minute.

11. Une méthode selon la revendication 1, selon laquelle ledit fluide supercritique est choisi parmi le groupe comprenant l'anhydride carbonique, les alcools, l'hexane, l'acétone, l'hexafluorure de soufre, et leurs mélanges.

12. Une méthode selon la revendication 1, selon laquelle ledit fluide supercritique est choisi parmi le groupe comprenant l'anhydride carbonique, l'alcool isopropylique et leurs mélanges.

13. Une méthode selon la revendication 1, selon laquelle ledit fluide supercritique est l'anhydride carbonique.

14. Une méthode selon la revendication 12, selon laquelle ledit fluide supercritique comprend:
(a) de 70 à 99 % en poids d' anhydride carbonique; et
(b) de 1 à 30 % en poids d'alcool isopropylique.

15. Une méthode selon la revendication 14, selon laquelle ledit fluide supercritique comprend:
(a) de 75 à 85% en poids d'anhydride carbonique; et
(b) de 15 à 25% en poids d'alcool isopropylique.

16. Une méthode selon la revendication 1, selon laquelle ladite pression est comprise entre 4,12 MPa et 34,35 MPa et ladite température est comprise entre 21 et 45°C.

17. Une méthode selon la revendication 16, selon laquelle ladite pression est comprise entre 6,18 MPa et 20,61 MPa et ladite température est comprise entre 21 et 35°C.

18. Une méthode selon la revendication 1, comprenant également l'étape d'agitation mécanique du fluide supercritique pour produire un système de flux turbulent,
où ledit fluide supercritique comprend de 70 à 99 % en poids d'anhydride carbonique et de 1 à 30 % en poids d'alcool isopropylique,
où le débit dudit courant de fluide supercritique est compris entre 0,38 et 18,93 litres par minute, et
où ledit article polymère est un dispositif ophtalmique.

19. Une méthode selon la revendication 1, selon laquelle l'article polymère est une lentille de contact préparée à partir d'un mélange comprenant un macromère copolymérisable et deux ou plusieurs monomères copolymérisables.
